# EUROPÄISCHE PATENTSCHRIFT

(11) **EP 3 344 396 B1**
(45) Veröffentlichungstag und Bekanntmachung des Hinweises auf die Patenterteilung: **22.07.2020**
(21) Anmeldenummer: 16765938.2
(22) Anmeldetag: 31.08.2016
(51) Int. Cl.: B02C 19/18, B09B 3/00

(54) **VERFAHREN ZUM RECYCLING VON KOMPOSITWERKSTOFFEN**
METHOD FOR RECYCLING COMPOSITE MATERIALS
PROCÉDÉ DE RECYCLAGE DE MATÉRIAUX COMPOSITES

(30) Priorität: 03.09.2015 DE 102015216932
(43) Veröffentlichungstag der Anmeldung: 11.07.2018
(73) Patentinhaber: Fraunhofer-Gesellschaft zur Förderung der angewandten Forschung e.V., 80686 München (DE); ImpulsTec GmbH, 01129 Dresden (DE)
(72) Erfinder: BITTNER, Andreas, 97218 Gerbrunn (DE); LÖBMANN, Peer, 97218 Gerbrunn (DE); KILO, Martin, 97299 Zell am Main (DE); SENGER, Stefan, 97855 Triefenstrein (DE); RELLER, Armin, 86159 Augsburg (DE); EISERT, Stefan, 02689 Wehrsdorf (DE); MÜLLER, Tim, 01477 Kleinwolmsdorf (DE); GUTFLEISCH, Oliver, 64287 Darmstadt (DE)
(74) Vertreter: Pfenning, Meinig & Partner mbB
(86) Internationale Anmeldenummer: PCT/EP2016/070542
(87) Internationale Veröffentlichungsnummer: WO 2017/037129

(56) Entgegenhaltungen:
- EP-A1- 0 893 250
- DE-A1- 19 539 699
- JP-A- 2000 037 622
- US-A1- 2012 132 732
- US-A1- 2014 326 809

## Beschreibung

Die vorliegende Erfindung betrifft ein Verfahren zum Recycling von Kompositwerkstoffen mittels elektrohydraulischer Zerkleinerung, wodurch eine Trennung verschiedener Materialien, wie Glas, Halbleiter, Metalle sowie Polymere möglich ist.

Für das Recycling von Solarzellen klassisch eingesetzte, mechanische Zerkleinerungsverfahren, wie Schreddern und Mahlen, zerkleinern die Solarzellen üblicherweise auf eine definierte Zielkorngröße und schließen den Materialverbund damit nur ungenügend auf. Eine effektive Abtrennung des Halbleitermaterials von dem Glas und von der Polymerfolie kann damit nicht erzielt werden, weshalb das gesamte Materialvolumen anschließend entmetallisiert werden muss, was in der Regel nasschemisch erfolgt (s. Andreas Breyer, PV

Recycling: Update on legal and technology issues (2013), http://www.solarnovus.com/pv-recycling-update-on-legal-and-technology-issues_N6363.html, Andreas Wade, Innovationsforum: Life Cycle und Recycling von seltenen Metallen mit strategischer Bedeutung (2011), http://www.loserchemie.de/innoforum.html, sowie Ulrich Loser, Technisches Verfahren zum Recycling von Dünnschichtsolarmodulen, DE 10 2008 058 530 B4 (2012)).

Des Weiteren werden bei den konventionellen Zerkleinerungsverfahren schwermetallhaltige Stäube erzeugt, die gefährlich und gesundheitsschädlich sind und aufwendig abgesaugt werden müssen. Zudem ist die Zerkleinerung mit einem hohen Verschleiß der Mahlwerkzeuge verbunden. Der Verschleiß ist durch den damit erzeugten hohen Wartungsaufwand nicht nur kostenintensiv, er bewirkt zudem einen signifikanten Eiseneintrag in die verschiedenen Materialfraktionen. Durch den Eiseneintrag entsteht eine starke Qualitätsminderung der Materialien, weshalb das Eisen anschließend mit hohem Aufwand beispielsweise nasschemisch entfernt werden muss.

Um die Halbleitermaterialien vom Glas und von der Polymerfolie abzulösen, sind nach der mechanischen Zerkleinerung weitere aufwendige Prozessschritte notwendig, da das gesamte zerkleinerte Modul behandelt werden muss. Die Wertstoffe (Halbleiter) machen dabei nur einen geringen Massenanteil des Moduls aus. In der Regel ist die Ablösung des Halbleitermaterials mit einem starken Einsatz von Säuren, Basen oder Oxidationsmitteln verbunden. Die gängigen nasschemischen Entmetallisierungsverfahren sind besonders aufwendig, wenn Mischungen aus verschiedenen Solarzellentypen (Si, CdTe, CiS CiGS, Perowskit) behandelt werden sollen. Da keine universellen Entschichtungsverfahren existieren, muss jeder Solarzellentyp mit einem speziellen Verfahren behandelt werden.

Alternativ werden auch mechanische Abstrahlverfahren oder nassmechanische Abreibungsverfahren (Attrition) für die Entmetallisierung eingesetzt (BAM). Die Abstrahlverfahren können nur für intakte Solarmodule eingesetzt werden, nach vorhergier energetisch aufwendiger thermischer Delamination (T = 500 °C). Zudem muss das Strahlmittel (z. B. Sand) anschließend wieder aufwendig abgetrennt werden. Bei den Abreibungsverfahren ist genau wie bei den nasschemischen Verfahren zuvor eine mechanische Zerkleinerung durch Hammermühlen erforderlich. Eine vollständige Freilegung der Halbleitermaterialien und vollständige Trennung von Glas und Polymerfolie ist hier schwierig, insbesondere ohne hohen Energieeintrag. So kann das wertvolle Halbleitermaterial nicht vollständig zurückgewonnen werden.

Bei CdTe-Solarzellen wurde nach dem Abreibungsverfahren 78,7 % des Wertstoffes wiedergefunden, bei CIS-Solarzellen sogar nur ca. 54 %. Nach Abtrennung der Polymerfolie mit Glas durch Sieben (150 µm) konnte davon jeweils wiederum nur ein Teil in die (Fein-)Fraktion für die weitere Aufkonzentration überführt werden. Bei den CIS-Solarzellen wurden von den wiedergefundenen 54 % nur etwa 40 % (d. h. nur etwa 22 % des ursprünglich vorhandenen CIS-Materials) in die Feinfraktion überführt. Neben dem hohen Verlust an Wertstoffen lässt dies zudem auf sehr starke Verunreinigungen der Glas-/Polymerfraktion durch nicht vollständig abgetrenntes Halbleitermaterial schließen.

Um die Energie- und Ressourceneffizienz des Solarmodulrecyclings grundlegend zu erhöhen, werden neuartige Verfahren benötigt, mit denen die Materialien effizient, sicher und mit hoher Reinheit in die einzelnen Bestandteile (Glas, Polymer, Metall, Halbleiter) aufgetrennt werden können. Mit diesen Verfahren sollte insbesondere eine Reduktion des Chemikalieneinsatzes und des Prozessaufwands ermöglicht werden. Außerdem soll die Entstehung gesundheitsschädlicher Stäube und die Verunreinigung der Materialien durch Eiseneintrag möglichst unterdrückt werden. Das Verfahren sollte idealerweise universell auf verschiedene Solarzellentypen oder auch vergleichbare Technologien angewendet werden können. Aus der US 2012/132732 A ist ein Verfahren zum Recycling von Kompositwerkstoffen mittels elektrohydraulischer Zerkleinerung, bei dem in einem Behälter mit flüssigem Medium ein Kompositwerkstoff vorgelegt wird, der mindestens ein Glas, mindestens einen Halbleiter und mindestens ein Polymer enthält bekannt. In dem Verfahren wird der Kompositwerkstoff mittels einer Impulsstromquelle elektrischen Stoßentladungen zwischen mindestens zwei Elektroden einer Unterwasserfunkstrecke eines Behälters bei einer Impulsenergie pro Elektrode von 200 bis 1500 J unterworfen, wodurch eine Abtrennung des Glases vom restlichen Kompositwerkstoff erfolgt.

Ausgehend hiervon war es Aufgabe der vorliegenden Erfindung, ein Verfahren zum Recycling von Kompositwerkstoffen bereit zu stellen, das einfach zu handhaben ist und mit dem die einzelnen Materialien im Kompositwerkstoff in hoher Reinheit wiedergewonnen werden können.

Diese Aufgabe wird durch das Verfahren mit den Merkmalen des Anspruchs 1 Die weiteren abhängigen Ansprüche zeigen vorteilhafte Weiterbildungen auf.

Erfindungsgemäß wird ein Verfahren zum Recycling von Kompositwerkstoffen mittels elektrohydraulicher Zerkleinerung bereitgestellt, bei dem
a) in einem Behälter mit flüssigem Medium ein Kompositwerkstoff vorgelegt wird, der aus der Gruppe der Materialien Glas, Halbleiter, Metall und Polymer mindestens zwei Materialien enthält, und
b) der Kompositwerkstoff mittels einer Impulsstromquelle elektrischen Stoßentladungen zwischen mindestens zwei Elektroden einer Unterwasserfunkstrecke eines Behälters bei einer Arbeitsspannung im Bereich von 30 bis 50 kV und einer Impulsenergie pro Elektrode von 200 bis 1500 J unterworfen wird und
c) durch mindestens einen physikalischen Trennungsschritt die Materialien voneinander und von dem flüssigen Medium separiert werden.

Unter Kompositwerkstoff sind im Rahmen der vorliegenden Erfindung sowohl makroskopisch homogene und mikroskopisch heterogene Systeme als auch Verbundwerkstoffe als auch makroskopisch heterogene und mikroskopisch homogene Systeme zu verstehen.

Die elektrohydraulische Zerkleinerung (EHZ) ermöglicht es, Materialien an den Phasengrenzen aufzutrennen und so auch Beschichtungen von den Substraten zu entfernen. Die Effektivität der Trennung hängt dabei allerdings von der mechanischen Festigkeit und von den (verschiedenen) physikalischen Eigenschaften (insbesondere Schallausbreitungsgeschwindigkeit und elektrische Leitfähigkeit) der verbundenen Materialien ab. So ist bekannt, dass mit dieser Methode keramische Materialien von Metallfolien abgelöst werden können. Die Beschichtungen bestanden hierbei aus feinkörnigen Materialien mit klaren Phasengrenzen (z. B. partikuläre Elektrodenmaterialien, wie Li(Ni,Co,Mn)O₂ und Leitruß, die mit einem Binder, wie PVDF, auf eine Metallfolie, AI oder Cu, aufgebracht worden sind).

Besonders überraschend war es deshalb, dass es mit der elektrohydraulischen Zerkleinerung möglich war, die dichten, meist korngrenzenfreien Halbleiterschichten, die fest mit dem Glassubstrat verbunden sind, vollständig freizulegen und von dem Glas und von der Polymerfolie abzutrennen. Dies war insbesondere unerwartet, da die Materialunterschiede (v. a. die akustische Impedanz und mechanische Festigkeitsunterschiede) zwischen Halbleitermaterial und Glas nicht so deutlich ausgeprägt sind wie zwischen Metall und Keramik. Auch die einfache Ablösung der Halbleiterschichten von der weichen, gut haftenden Polymerfolie (z. B. EVA) sowie die Ablösung des Glases von der Polymerfolie war so nicht zu erwarten. Zudem liegen die Schichtdicken der abgelösten Halbleiterschichten mit wenigen µm deutlich unterhalb der ablösbaren Schichtdicken, die bisher bekannt sind.

Ein weiterer überraschender Effekt beim erfindungsgemäßen Verfahren ist es, dass auch eine Trennung von Materialien der gleichen Werkstoffklasse ermöglicht wird. So ist es bei Solarzellen z.B. möglich, das hochwertige Frontglas vom Rückseitenglas zu trennen und damit das hochwertige Frointgals in hoher Reinheit zu isolieren.

Dass sich die abgelösten Halbleitermaterialien in ihrer Partikelgröße klar von den sauberen Glasbruchstücken unterscheiden, erwies sich als besonders vorteilhaft für die weiteren Abtrenn- bzw. Klassierungsprozesse. Dieser überraschende Sachverhalt kann dadurch erklärt werden, dass die elektrohydraulische Zerkleinerung ihre Wirkung offensichtlich gezielt an den feinen Grenzflächen zwischen Glas- und Halbleitermaterial bzw. Polymerfolie entfaltet hat. Partikel mit Halbleitermaterial haben so einen größeren Energieeintrag erfahren als reine (saubere) Glasbruchstücke und wurden dadurch besonders geschädigt bzw. aufgetrennt. Dadurch kann im Anschluss mittels einfacher physikalischer Trennverfahren (z. B. Sieben, Auswaschen oder Filtern) reines Glas von den restlichen Solarzellenbestandteilen entfernt und das wertvolle Halbleitermaterial effektiv aufkonzentriert werden. Zusätzliche können dazu auch weitere physikalische oder physikalisch-chemische Trennverfahren eingesetzt werden.

Durch die erstmals mögliche Abtrennung einer sauberen Glasgrobfraktion, welche mehr als 80% der Gesamtmasse ausmacht, kann eine deutliche Anreicherung des Halbleitermaterials und eine Massenentfrachtung vor der chemischen Rückgewinnung bzw. der physikalische Abtrennung des Halbleitermaterials von den restlichen Bestandteilen in der Feinstfraktion erreicht werden. Dies ermöglicht eine erhebliches Effizienzsteigerungspotential und vollkommen neue und effizientere Verfahrensschritte zur Aufkonzentration, da mit deutlich geringerem Einsatz an Säuren, Laugen oder Oxidationsmitteln gearbeitet werden kann (weniger störendes Material, wie Glas oder Polymerfolien) bzw. da auf deren Einsatz komplett verzichtet werden kann. Alleine die vollständige Freilegung der Halbleitermaterialien bewirkt bereits eine Effizienzsteigerung, da die Materialien so für die Chemikalien einfach und schnell zugänglich sind. Durch die effektive und schonende Abtrennung der Polymerfolien und der Gläser bereits während des elektrohydraulische Zerkleinerungsschritts können nachgeschaltete Abtrennprozesse von Glas und Polymer eingespart oder ersetzt werden.

Verunreinigungen durch Eisen, wie sie bei den mechanischen Zerkleinerungsverfahren entstehen, können mit dem neuen Verfahren stark vermindert werden, da keine Interaktion des Materials mit Mahlwerkzeugen stattfindet. Insbesondere erfolgt kein Eiseneintrag in die Materialien, der anschließend nur besonders schwer wieder extrahiert werden kann. Auch entstanden bei der Zerkleinerung im flüssigen Medium keine gesundheitsgefährdenden Stäube, wie sie bei den klassischen Verfahren erzeugt werden, da sie in der Prozessflüssigkeit passiviert werden.

Es ist bevorzugt, dass die Arbeitsspannung in Schritt b) im Bereich von 30 bis 50 kV, insbesondere im Bereich von 35 bis 45 kV liegt.

Eine weitere bevorzugte Ausführungsform sieht vor, dass die Impulsenergie in Schritt b) im Bereich von 300 bis 1200 J, insbesondere im Bereich von 400 bis 1000 J liegt.

Die Arbeitsfrequenz in Schritt b) liegt vorzugsweise bei maximal 10 Hz, insbesondere im Bereich von 1 bis 5 Hz.

Der Abstand zwischen den Elektroden beträgt vorzugsweise zwischen 5 und 200 mm.

Die Behandlungsdauer der elektrohydraulischen Zerkleinerung beträgt vorzugsweise von 1 bis 500 Impulse, insbesondere von 5 bis 350 Impulse.

Der physikalische Trennschritt in Schritt c) ist vorzugsweise ausgewählt aus der Gruppe bestehend aus Sieben, Filtern, Waschen, Dispergieren, Sedimentieren, Flotieren, Dichteseparieren, Aerostromsortieren, Magnetscheiden, Wirbelstromscheiden, optischer Separation, sensorbasierter Separation, elektrophoretischer Separation, elektrostatischer Separation und Kombinationen dieser Schritte.

Das im Kompositwerkstoff enthaltene Polymer ist vorzugsweise ausgewählt aus der Gruppe der Elastomere, insbesondere Ethylenvinylacetat, Polyurethan-Elastomere, Polyacrylate, Silikone und Kombinationen hiervon, und Thermoplasten, insbesondere Polyvinylbutyral, Polyvinylfluorid, Polyurethan-Thermoplasten, Ionoplasten, Polyolefine, insbesondere modifizierte Polyolefine, und Kombinationen hiervon. Es können aber grundsätzlich auch Duroplasten als Polymer im Kompositwerkstoff enthalten sein.

Das im Kompositwerkstoff enthaltende Glas ist vorzugsweise ausgewählt aus der Gruppe der silicatischen Gläser, insbesondere Borosilicatglas und Kalknatronglas.

Das flüssige Medium ist vorzugsweise ausgewählt aus der Gruppe bestehend aus Wasser, Ölen, Tensiden, Säuren, Basen, Oxidationsmitteln und Gemische hiervon, wobei in dem Behälter bevorzugt von 1 bis 300 I des flüssigen Mediums enthalten sind.

Eine bevorzugte Ausführungsform sieht vor, dass der Kompositwerkstoff aus Solarzellenabfall oder Solarzellenproduktionsausschüssen stammt. Hierbei ist es auch möglich, dass der Solarzellenabfall aus verschiedenen Solarzellentypen besteht. Hierzu zählen z.B. Si-, CdTe-, CiS-, CiGS-, CiGSS- oder Perowskit-Solarzellen.

Im Falle der Anwendung auf verschiedene Solarzellentypen oder von vorliegenden Mischungen zeigt das neue Verfahren weitere Vorteile. Denn das Verfahren ist in gleicher Weise auf verschiedene Solarzellentypen anwendbar, wodurch diese ohne größere Prozessanpassungen separat oder gemeinsam aufgeschlossen werden können. Im Vergleich zu den verschiedenen speziellen nasschemischen Entschichtungsverfahren für die einzelnen Solarzellentypen, ist dies mit einem deutlich verringerten Aufwand an Chemikalien und Prozessschritten verbunden. Bei den aufzuschließenden Solarzellen kann es sich um Mischungen aus verschiedenen Dickschichtsolarzellen mit verschiedenen Dünnschichtsolarzellen handeln, die Schichten z.B. aus Si, CdTe, CiS, CiGS, CIGSS oder Perowskit oder auch leitfähige Schichten, z.B. aus ITO oder Aluminium/Silber-Schichten enthalten.

Außer auf Solarzellen kann das neue Verfahren auch auf andere vergleichbare Dünnschichtsysteme, wie Dünnschichtbatterien, Feststoffbatterien, Polymerbatterien, Displays, Leuchtdioden, Supraleiter, magnetische Funktionswerkstoffe (z. B. polymerbeschichtete oder polymergebundene Magnete), metallisierte Kunststoffe, metallisierte Gläser sowie polymerbeschichtete Gläser angewendet werden.

Es ist bevorzugt, dass mindestens 60 Gew.-%, insbesondere mindestens 95 Gew.-% des mindestens einen Halbleiters und/oder Metalls zurückgewonnen werden.

Des Weiteren ist es bevorzugt, dass mindestens 80 Gew.-%, insbesondere mindestens 95 Gew.-% des Glases und/oder Polymers zurückgewonnen werden.

Demgemäß kann dem Schritt a) eine mechanische Vorzerkleinerung, insbesondere durch Schreddern, Mahlen, Brechen, Schneiden, Sägen oder Kombinationen hiervon vorgelagert werden.

Erfindungsgemäß wird ein Recycling-Glas bereitgestellt, das mit dem zuvor beschriebenen Verfahren recyclierbar ist, mit einer Reinheit von mindestens 95 Gew.-%, insbesondere von mindestens 99 Gew.-%.

Weiterhin wird erfindungsgemäß ein Recycling-Halbleiter, mit dem zuvor beschriebenen Verfahren recyclierbar ist, mit einer Reinheit von mindestens 5 Gew.-%, insbesondere von mindestens 99 Gew.-% sowie ein Recycling-Metall, das mit dem erfindungsgemäßen Verfahren recyclierbar ist, mit einer Reinheit von mindestens 50 Gew.-%, insbesondere von mindestens 99 Gew.-% bereitgestellt.

Ebenso wird ein Recycling-Polymer, das mit dem zuvor beschriebenen Verfahren recyclierbar ist, mit einer Reinheit von mindestens 50 Gew.-%, insbesondere von mindestens 99 Gew.-% bereitgestellt.

Insgesamt kann das Recycling von Solarzellen und vergleichbaren Systemen durch den neuen Prozess nicht nur effizienter und schneller (Laugung, nachgeschaltete Eisen- und Polymerabtrennung), sondern auch umweltfreundlicher (Chemikalieneinsatz), sicherer (Staub) und flexibler (verschiedene Solarzellentypen) erfolgen.

Anhand der nachfolgenden Beispiele und Figuren soll der erfindungsgemäße Gegenstand neu erläutert werden, ohne diesen auf die hier gezeigte spezifischen Ausführungsformen einschränken zu wollen.

Im Folgenden ist die Ausführung des neuen Recyclingverfahrens am Beispiel von CdTe-Solarzellen, am Beispiel von CIGS-Solarzellen, am Beispiel von Si-Solarzellen und am Beispiel von Displays aufgezeigt:

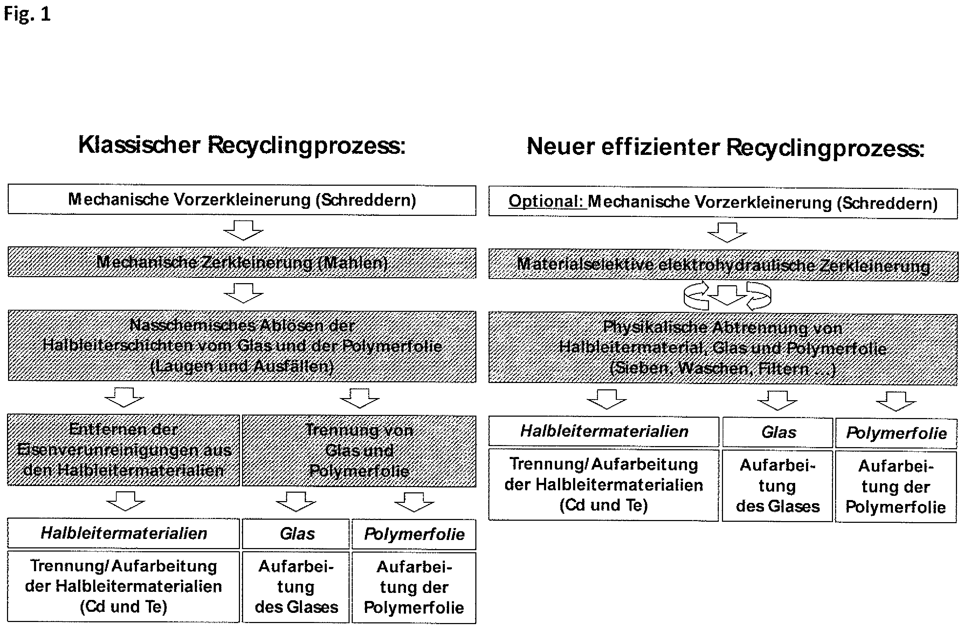

Fig. 1 zeigt den Ablauf eines Recyclingverfahrens gemäß Stand der Technik (links) und eines erfindungsgemäßen Recyclingverfahrens (rechts).

Die mechanische Vorzerkleinerung ist bei dem neuen Prozess (rechte Seite) nicht mehr erforderlich und kann optional eingesetzt werden (z. B. für kleinere Reaktorvolumen der EHZ-Anlage). Über die Ersetzung der mechanischen Zerkleinerung durch die materialselektive elektrohydraulische Zerkleinerung kann eine nasschemische Entschichtung komplett eingespart werden und durch effiziente physikalische bzw. physikalisch-chemische Trennprozesse (Sieben, Filtern, Waschen bzw. Dispergieren, Sedimentieren, Flotieren, Dichteseparieren, Aerostromsortieren, Magnetscheiden, elektrophoretisch Separieren, elektrostatisch Separieren etc.) ersetzt werden. Durch die Integration von Sieben und Filtern in die EHZ-Anlage bzw. durch Abtrennen von Grobfraktionen während der elektrohydraulischen Zerkleinerung oder zwischen verschiedenen EHZ-Behandlungen können die Trennprozesse auch mit den Zerkleinerungsprozessen kombiniert werden. Auch nasschemische Verfahren können optional in den neuen Recyclingprozess integriert werden, indem man beispielsweise Säuren, Laugen oder Tenside zu den Reaktormedien zugibt bzw. diese als Reaktormedien benutzt. Durch die Abtrennung und Separation der verschiedenen Materialien (Halbleiter, Glas und Polymer) können die klassischen nachgeschalteten Trennprozesse eingespart oder ersetzt werden. Im Anschluss erfolgt die separate Aufarbeitung der einzelnen Materialfraktionen (Halbleiter, Polymer, Glas).

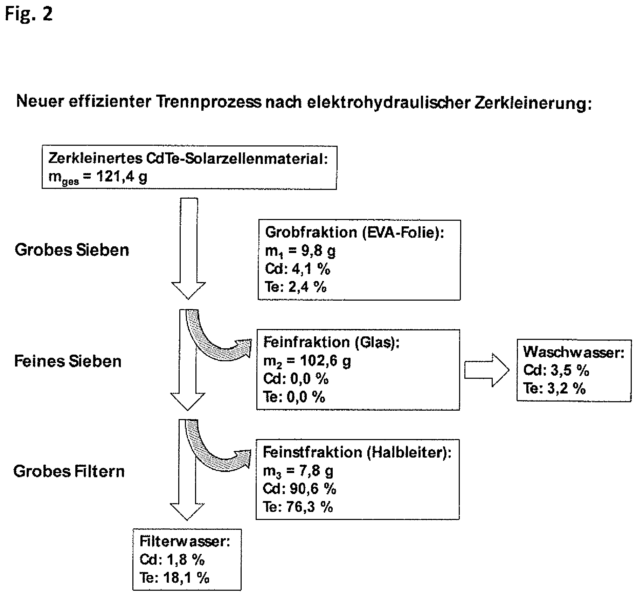

In Fig. 2 ist das erfindungsgemäße Recyclingverfahren mit den resultierenden Reinheiten dargestellt.

Nach der elektrohydraulischen Zerkleinerung der CdTe-Solarzellen sind diese bereits in die verschiedenen Materialfraktionen (Polymer, Glas, Halbleiter) aufgetrennt. Das Glas- und Halbleitermaterial ist von den Polymerfolien (EVA-Folie) abgelöst. Zusätzlich sind auch die dünnen Halbleiterschichten vom Glas abgetrennt. Die Polymerfolie kann durch grobes Sieben abgetrennt werden. Da sich die Halbleitermaterialien in ihren Eigenschaften, z. B. in ihren Partikelgrößen, signifikant von den Glasbestandteilen unterscheiden, können diese durch einfache Trennverfahren, wie Sieben, Waschen (mit Wasser) und Filtern, abgetrennt bzw. aufkonzentriert werden. Rechnet man das Filtrat, das Waschwasser und das Filterwasser zusammen, so können mehr als 95 % des vorhandenen Cd und mehr als 95 % des vorhandenen Te zurückgewonnen werden, was sogar die Rückgewinnungsrate des nasschemischen Trennprozesses übertrifft. Im Filtrat sind nach groben Filtern mehr als 90 % des vorhandenen Cd und mehr als 75 % des vorhandenen Te in weniger als 10 Gew% des Gesamtmaterials aufkonzentriert. Eine noch höhere Aufkonzentration ist durch feineres Filtern zu erwarten. Der Großteil des Solarzellenmaterials ist das Glas. Dieses kann alleine durch Sieben in großer Menge (ca. 85 Gew% bezogen auf das Gesamtmaterial) und mit sehr hoher Reinheit (0,0 % des insgesamt vorhandenen Cd und 0,0 % des insgesamt vorhandenen Te) von den restlichen Bestandteilen abgetrennt werden.

Leichte Anhaftungen an der Polymerfolie können vergleichsweise einfach z. B. nasschemisch abgelöst werden, da sie sehr gut freigelegt sind und da die Polymerfolie nur einen sehr geringen Anteil am Gesamtmaterial ausmacht. Das erfindungsgemäße Recyclingverfahren kann für sortenreine Ausgangsstoffe oder universell für Mischungen aus verschiedenen Kompositwerkstoffen und insbesondere für Mischungen aus verschiedenen Solarzellentypen angewendet werden. Die zurückgewonnenen Materialien zeichnen sich dabei durch ihre hohen Reinheiten aus. Dies ist vor allem für das hochwertige Frontglas der Solarzellen von hoher Relevanz, dessen niedrige Fe-Gehalte hohe Lichtdurchlässigkeiten bewirken. Die effiziente und verunreinigungsarme Abtrennung dieses Glases vom Rest der Module ermöglicht dessen Wiederverwendung mit hoher Wertschöpfung, beispielsweise für neue Solarzellen.

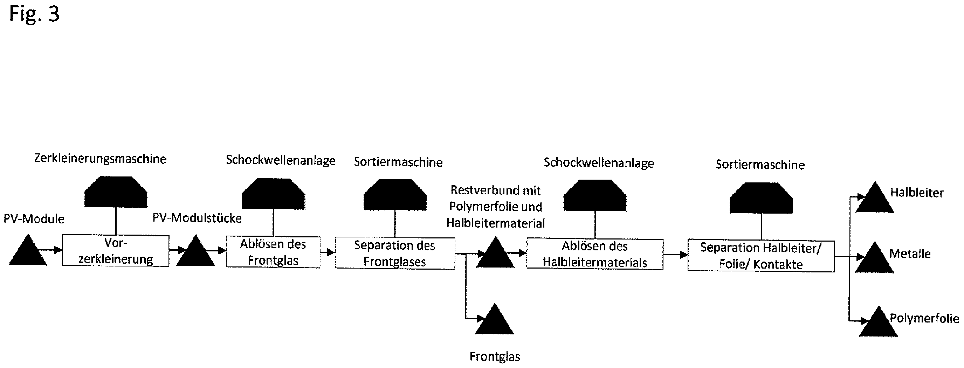

Fig. 3 zeigt den Ablauf des erfindungsgemäßen Recyclingverfahrens am Beispiel von einseitig verglasten Solarzellen.

Das aufgezeigte Ausführungsbeispiel für einseitig verglaste Solarzellen, in der Regel Si-Dickschichtsolarzellen, beginnt mit einer optionalen mechanischen Vorzerkleinerung der Module in Bruchstücke. Diese Bruchstücke werden anschließend mittels elektrohydraulischer Zerkleinerung behandelt, wodurch zunächst das Frontglas kontaminationsarm vom Restverbund abgelöst wird. Dieses Frontglas kann anschließend durch einfache Separationsverfahren, wie beispielsweise Nasssieben in hoher Reinheit abgetrennt werden. Der Restverbund, bestehend aus der Polymerfolie, dem Halbleitermaterial und Metallkontakten kann darauf erneut mittels elektrohydraulischer Zerkleinerung in die einzelnen Materialfraktionen zerlegt werden. Über Sortierverfahren können dann die verschiedenen Materialien wie Halbleiter, Metalle und Polymerfolie voneinander abgetrennt und in hoher Qualität zurückgewonnen werden.

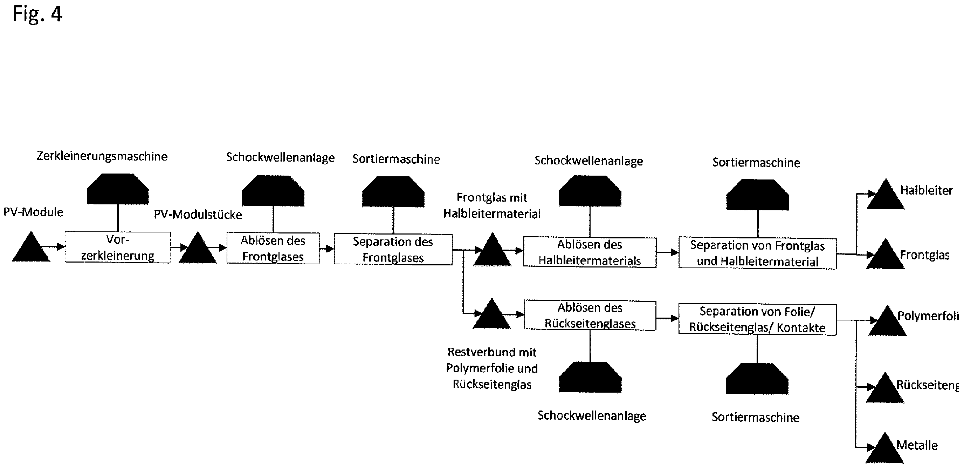

Fig. 4 zeigt den Ablauf des erfindungsgemäßen Recyclingverfahrens am Beispiel von beidseitig verglasten Solarzellen.

Zu den beidseitig verglasten Solarzellen zählen CdTe-Dünnschichtsolarzellen, aber auch bestimmte Si-Solarzellen. Diese enthalten ein Front- und ein Rückseitenglas. Besonders wertvoll ist dabei das Fe-arme und hochtransparente Frontglas. In einem ersten optionalen Schritt können die beidseitig verglasten Solarzellen mechanisch vorzerkleinert werden. Die erhaltenen Bruchstücke, bestehend aus Laminaten aus Frontglas, Halbleitermaterial, Polymerfolie, Metallen und Rückseitenglas, werden anschließend mittels elektrohydraulischer Zerkleinerung behandelt. Nach vergleichsweise kurzer Behandlungsdauer werden die Laminate dabei so aufgetrennt, dass das Frontglas inklusive der Halbleiterschichten in groben Stücken abgelöst ist, während die Polymerfolie mit den Metall- und Rückseitenglasanhaftungen noch im Verbund vorliegen. Durch einfache Separationsverfahren wie beispielsweise grobes Sieben kann das Frontglas inklusive des Halbleitermaterials dann sehr einfach abgetrennt werden. Mittels weiterer Schockwellenbehandlung kann das Halbleitermaterial dann vom Glas abgelöst werden. Dieser Schritt kann ggf. auch durch einen nasschemischen Schritt ersetzt werden. Als Ergebnis erhält man hochreines Frontglas und Halbleitermaterial, das beispielsweise für neue Solarzellen wiederverwendet werden kann. Der übrig gebliebenen Restverbund aus Polymerfolie und Rückseitenglas kann durch weitere Schockwellenbehandlung und anschließende Sortierung ebenfalls voneinander getrennt und wiederverwendet werden. Die effiziente Auftrennung der verschiedenen Materialien gelingt hier sowohl für intakte Module als auch für beschädigte/gebrochene Module und Produktionsausschüsse.

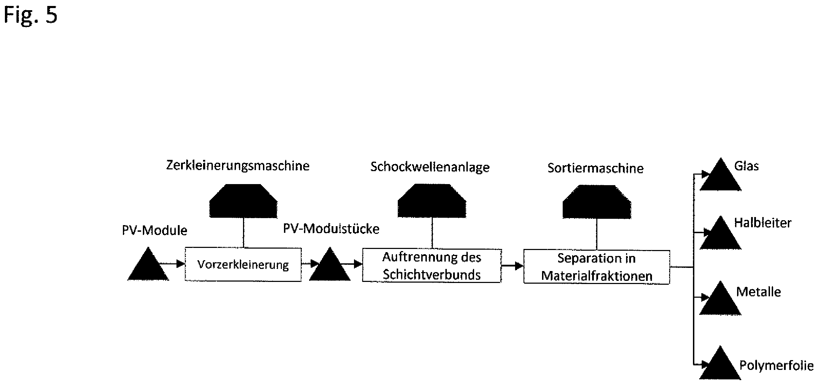

Fig. 5 zeigt den Ablauf des erfindungsgemäßen Recyclingverfahrens am Beispiel von Mischungen aus einseitig und beidseitig verglasten Solarzellen.

Nach einer möglichen mechanischen Vorzerkleinerung der Mischungen aus verschiedenartigen Solarzellentypen, werden die erhaltenen Solarzellenbruchstücke mittels elektrohydraulischer Zerkleinerung in die einzelnen Materialfraktionen zerlegt. Durch anschließende Sortierverfahren können die verschiedenen Materialien dann aufgetrennt und in hoher Reinheit zurückgewonnen werden.

Das vorliegende Verfahren kann weiterhin für die effiziente Aufbereitung von Displays angewendet werden. Dabei ermöglicht das neue Recyclingverfahren auf Basis der elektrohydraulischen Zerkleinerung das Zerlegen kompletter Displays, beispielsweise von Handys und Laptops, und die Ablösung des Glases von der Polymerfolie.

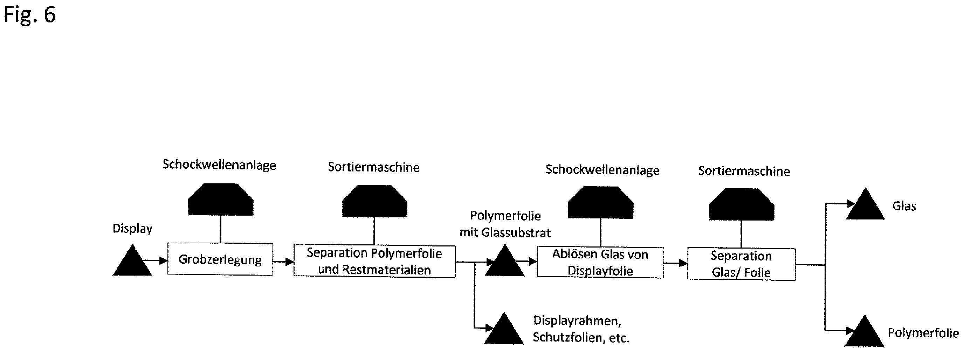

Fig. 6 zeigt den Ablauf des erfindungsgemäßen Recyclingverfahrens am Beispiel von Displays.

Displays werden mittels elektrohydraulischer Zerkleinerung zerlegt. Durch anschließende Sortierverfahren kann die Polymerfolie inklusive des Glassubstrats von den Restmaterialien (Displayrahmen, Schutzfolien, etc.) getrennt werden. Nach weiterer Behandlung mittels elektrohydraulischer Zerkleinerung kann das Glas von der Polymerfolie abgelöst und anschließend durch Sortierung abgetrennt werden. Das auf diese Weise zurückgewonnene Glas zeichnet sich ebenfalls durch seine besonders hohe Reinheit aus (Fe-Verunreinigungsgehalt < 100 ppm, insbesondere < 10 ppm) und bietet dadurch vielfältige Verwertungsmöglichkeiten.

## Patentansprüche

1. Verfahren zum Recycling von Kompositwerkstoffen mittels elektrohydraulischer Zerkleinerung, bei dem
a) in einem Behälter mit flüssigem Medium ein Kompositwerkstoff vorgelegt wird, der mindestens ein Glas, mindestens einen Halbleiter und mindestens ein Polymer enthält,
b) der Kompositwerkstoff mittels einer Impulsstromquelle elektrischen Stoßentladungen zwischen mindestens zwei Elektroden einer Unterwasserfunkstrecke eines Behälters bei einer Arbeitsspannung im Bereich von 30 bis 50 kV und einer Impulsenergie pro Elektrode von 200 bis 1500 J unterworfen wird, wodurch eine Abtrennung des Glases vom restlichen Kompositwerkstoff erfolgt, und
c) durch mindestens einen physikalischen Trennungsschritt das Glas vom restlichen Kompositwerkstoff separiert wird.

2. Verfahren nach Anspruch 1,
**dadurch gekennzeichnet, dass** die Arbeitsspannung in Schritt b) im Bereich von 35 bis 45 kV liegt.

3. Verfahren nach einem der vorhergehenden Ansprüche,
**dadurch gekennzeichnet, dass** die Impulsenergie in Schritt b) im Bereich von 300 bis 1200 J, insbesondere im Bereich von 400 bis 1000 J liegt.

4. Verfahren nach einem der vorhergehenden Ansprüche,
**dadurch gekennzeichnet, dass** die Arbeitsfrequenz in Schritt b) bei maximal 10 Hz, insbesondere im Bereich von 1 bis 5 Hz liegt.

5. Verfahren nach einem der vorhergehenden Ansprüche,
**dadurch gekennzeichnet, dass** der physikalische Trennschritt ausgewählt ist aus der Gruppe bestehend aus Sieben, Filtern, Waschen, Dispergieren, Sedimentieren, Flotieren, Dichteseparieren, Aerostromsortieren, Magnetscheiden, Wirbelstromscheiden, optischer Separation, sensorbasierter Separation, elektrophoretischer Separation, elektrostatischer Separation und Kombinationen hiervon.

6. Verfahren nach einem der vorhergehenden Ansprüche,
**dadurch gekennzeichnet, dass** das Polymer im Kompositwerkstoff aus der Gruppe der Elastomere, insbesondere Ethylenvinylacetat, Polyurethan-Elastomere, Polyacrylate, Silikone und Kombinationen hiervon, und Thermoplasten, insbesondere Polyvinylbutyral, Polyvinylfluorid, Polyurethan-Thermoplasten, Ionoplasten, Polyolefine, insbesondere modifizierte Polyolefine, und Kombinationen hiervon besteht.

7. Verfahren nach einem der vorhergehenden Ansprüche,
**dadurch gekennzeichnet, dass** das Glas ausgewählt ist aus der Gruppe der silicatischen Gläser, insbesondere Borosilicatglas und Kalknatronglas.

8. Verfahren nach einem der vorhergehenden Ansprüche,
**dadurch gekennzeichnet, dass** das flüssige Medium ausgewählt ist aus der Gruppe bestehend aus Wasser, Ölen, Tensiden, Säuren, Basen, Oxidationsmitteln und Gemische hiervon, wobei in dem Behälter bevorzugt von 1 bis 300 l des flüssigen Mediums enthalten sind.

9. Verfahren nach einem der vorhergehenden Ansprüche,
**dadurch gekennzeichnet, dass** der Kompositwerkstoff aus Solarzellenabfall oder Solarzellenproduktionsausschüssen stammt, wobei der Solarzellenabfall insbesondere aus Solarzellen unterschiedlichen Typs besteht oder dass der Kompositwerkstoff aus Abfällen oder Produktionsausschüssen von Dünnschichtbatterien, Feststoffbatterien, Polymerbatterien, Displays, Leuchtdioden, Supraleitern, magnetischen Funktionswerkstoffen (z. B. polymerbeschichtete oder polymergebundene Magnete), metallisierten Kunststoffen, metallisierten Gläsern, polymerbeschichteten Gläsern oder Mischungen hiervon stammt,
wobei der Kompositwerkstoff dünne Schichten enthält, deren Schichtdicken kleiner sind als 500 µm, bevorzugt 100 bis kleiner 500 µm und besonders bevorzugt kleiner als 10 µm..

10. Verfahren nach einem der vorhergehenden Ansprüche,
**dadurch gekennzeichnet, dass** mindestens 60 Gew.-%, insbesondere mindestens 95 Gew.-% des mindestens einen Halbleiters und/oder Metalls und/oder dass mindestens 80 Gew.-%, insbesondere mindestens 95 Gew.-% des Glases und/oder Polymers zurückgewonnen werden.

11. Verfahren nach einem der vorhergehenden Ansprüche,
**dadurch gekennzeichnet, dass** vor Schritt a) eine mechanische Vorzerkleinerung, insbesondere durch Schreddern, Mahlen, Brechen, Schneiden, Sägen oder Kombinationen hiervon erfolgt.

## Claims

1. A method of recycling composite materials by means of electrohydraulic comminution, in which
a) a composite material is provided in a container with fluid medium, which composite material comprises at least one glass, at least one semiconductor and at least one polymer,
b) by means of a pulsed current source, the composite material is subjected to electrical impulse discharges between at least two electrodes of an underwater radio path of a container at an operating voltage in the range from 30 to 50 kV and a pulse energy per electrode from 200 to 1500 J, whereby a separation of the glass from the remaining composite material takes place, and
c) the glass is separated from the remaining composite material by at least one physical separation step.

2. A method according to claim 1,
**characterized in that** the operating voltage in step b) lies in the range from 35 to 45 kV.

3. A method according to any one of the preceding claims,
**characterized in that** the pulse energy in step b) lies in the range from 300 to 1200 J, in particular in the range from 400 to 1000 J.

4. A method according to any one of the preceding claims,
**characterized in that** the operating frequency in step b) is at most 10 Hz, in particular is in the range from 1 to 5 Hz.

5. A method according to any one of the preceding claims,
**characterized in that** the physical separation step is selected from the group consisting of sieving, filtering, washing, dispersion, sedimentation, flotation, density separation, air-flow sorting, magnetic separation, eddy-current separation, optical separation, sensor-based separation, electrophoretic separation, electrostatic separation and combinations thereof.

6. A method according to any one of the preceding claims,
**characterized in that** the polymer in the composite material is composed of the elastomer group, in particular ethylene vinyl acetate, polyurethane elastomers, polyacrylates, silicones and combinations thereof, and thermoplastics, in particular polyvinyl butyral, polyvinyl fluoride, polyurethane thermoplastics, ionoplasts, polyolefins, in particular modified polyolefins, and combinations thereof.

7. A method according to any one of the preceding claims,
**characterized in that** the glass is selected from the group of the siliceous glasses, in particular borosilicate glass and soda-lime glass.

8. A method according to any one of the preceding claims,
**characterized in that** the fluid medium is selected from the group consisting of water, oils, surfactants, acids, bases, oxidation means and mixtures thereof, wherein preferably from 1 to 300 I of the fluid medium is contained in the container.

9. A method according to any one of the preceding claims,
**characterized in that** the composite material derives from solar cell waste or solar cell production scraps, wherein the solar cell waste is in particular composed of solar cells of differing types, or **in that** the composite material derives from waste or production scraps from thin-film batteries, solid electrolyte batteries, polymer batteries, displays, light-emitting diodes, superconductors, magnetic operational materials (e.g.polymer-coated or polymer-bound magnets), metallised plastics materials, metallised glasses, polymer-coated glasses or mixtures thereof,
wherein the composite material comprises thin layers whose layer thicknesses are thinner than 500 µm, preferably 100 to less than 500 µm and particularly preferably thinner than 10 µm.

10. A method according to any one of the preceding claims,
**characterized in that** at least 60 percent by weight, in particular at least 95 percent by weight, of the at least one semiconductor and/or metal and/or **in that** at least 80 percent by weight, in particular at least 95 percent by weight, of the glass and/or polymer is/are recovered.

11. A method according to any one of the preceding claims,
**characterized in that** a mechanical pre-comminution, in particular by shredding, grinding, breaking, cutting, sawing or combinations thereof, takes place prior to step a).

## Revendications

1. Procédé pour le recyclage de matériaux composites à l'aide d'un broyage électrohydraulique, dans lequel
a) on place dans un récipient contenant un milieu liquide un matériau composite qui contient au moins un verre, au moins un semi-conducteur et au moins un polymère,
b) à l'aide d'une source de courant pulsé, on soumet le matériau composite à des décharges électriques à haute intensité entre au moins deux électrodes d'une liaison hertzienne sous-marine d'un récipient, pour une tension de travail comprise dans la plage de 30 à 50 kV et une énergie impulsionnelle par électrode de 200 à 1500 J, ce qui provoque une séparation du verre d'avec le matériau composite restant, et
c) par au moins une étape de séparation physique, on sépare le verre du matériau composite restant.

2. Procédé selon la revendication 1, **caractérisé en ce que** la tension de travail dans l'étape b) est comprise dans la plage de 35 à 45 kV.

3. Procédé selon l'une des revendications précédentes, **caractérisé en ce que** l'énergie impulsionnelle dans l'étape b) est comprise dans la plage de 300 à 1200 J, en particulier dans la plage de 400 à 1000 J.

4. Procédé selon l'une des revendications précédentes, **caractérisé en ce que** la séquence de travail dans l'étape b) est au maximum de 10 Hz, en particulier comprise dans la plage de 1 à 5 Hz.

5. Procédé selon l'une des revendications précédentes, **caractérisé en ce que** l'étape de séparation physique est choisie dans le groupe consistant en un tamisage, une filtration, un lavage, une dispersion, une sédimentation, une flottation, une séparation par densité, une séparation par courant d'air, une séparation magnétique, une séparation par lit fluidisé, une séparation optique, une séparation utilisant un capteur, une séparation électrophorétique, une séparation électrostatique et des combinaisons de ceux-ci.

6. Procédé selon l'une des revendications précédentes, **caractérisé en ce que** le polymère se trouvant dans le matériau composite est constitué du groupe des élastomères, en particulier l'éthylène-acétate de vinyle, les élastomères de polyuréthanne, les polyacrylates, les silicones et les combinaisons de ceux-ci, et des thermoplastiques, en particulier le polyvinylbutyral, le poly(fluorure de vinyle), les thermoplastiques de polyuréthanne, les ionoplastes, les polyoléfines, en particulier les polyoléfines modifiées, et des combinaisons de ceux-ci.

7. Procédé selon l'une des revendications précédentes,
**caractérisé en ce que** le verre est choisi dans le groupe des verres silicatés, en particulier le verre au borosilicate et le verre sodé calcique.

8. Procédé selon l'une des revendications précédentes,
**caractérisé en ce que** le milieu liquide est choisi dans le groupe consistant en l'eau, les huiles, les tensioactifs, les acides, les bases, les oxydants et les mélanges de ceux-ci, le récipient contenant de préférence 1 à 300 I du milieu liquide.

9. Procédé selon l'une des revendications précédentes,
**caractérisé en ce que** le matériau composite provient de déchets de cellules solaires ou de rebuts de la production de cellules solaires, le déchet de cellules solaires étant constitué en particulier de cellules solaires de différents types, ou **en ce que** le matériau composite provient de déchets ou de rebuts de production de batteries à couche mince, de batteries solides, de batteries polymères, de dispositifs d'affichage, de diodes électroluminescentes, de supraconducteurs, de matériaux fonctionnels magnétiques (par exemple les aimants revêtus d'un polymère ou liés à un polymère), de plastiques métallisés, de verres métallisés, de verres revêtus d'un polymère, ou de mélanges de ceux-ci,
le matériau composite contenant des couches minces, dont l'épaisseur de couche est inférieure à 500 µm, en particulier de 100 à moins de 500 µm et d'une manière particulièrement préférée inférieure à 10 µm.

10. Procédé selon l'une des revendications précédentes,
**caractérisé en ce qu'**on récupère au moins 60 % en poids, en particulier au moins 95 % en poids de l'au moins un semi-conducteur et/ou métal et/ou **en ce qu'**on récupère au moins 80 % en poids, en particulier au moins 95 % en poids du verre et/ou du polymère.

11. Procédé selon l'une des revendications précédentes,
**caractérisé en ce qu'**on procède avant l'étape a) à un prébroyage mécanique, en particulier par déchiquetage, broyage, concassage, découpage, sciage, ou par des combinaisons de ces techniques.
